# FASCICULE DE BREVET EUROPEEN

(11) **EP 3 898 273 B1**
(45) Date de publication et mention de la délivrance du brevet: **07.10.2026**
(21) Numéro de dépôt: 19848775.3
(22) Date de dépôt: 10.12.2019
(51) Int. Cl.: B60C 5/22, B60C 9/02, B60C 9/17, B60C 19/00, B60C 17/04

(54) **PNEUMATIQUE POUR VEHICULE COMPRENANT UNE STRUCTURE DE RIGIDIFICATION**
REIFEN FÜR FAHRZEUG MIT EINER VERSTEIFUNGSSTRUKTUR
TYRE FOR VEHICLE COMPRISING A STIFFENING STRUCTURE

(30) Priorité: 17.12.2018 FR 1873023
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: GIRARD, Mathieu, 63040 CLERMONT-FERRAND CEDEX 9 (FR); CALLAMAND, STÉPHANE, 63040 CLERMONT-FERRAND CEDEX 9 (FR); RIGO, SÉBASTIEN, 63040 CLERMONT-FERRAND CEDEX 9 (FR); HERNANDEZ, DAVID, 63040 CLERMONT-FERRAND CEDEX 9 (FR); HINC, HENRI, 63040 CLERMONT-FERRAND CEDEX 9 (FR); SIMONELLI, THOMAS, 63040 CLERMONT-FERRAND CEDEX 9 (FR); DEAL, MICHEL, 63040 CLERMONT-FERRAND CEDEX 9 (FR); DUCLOUX, ANTOINE, 63040 CLERMONT-FERRAND CEDEX 9 (FR)
(74) Mandataire: M.F.P. Michelin
(86) Numéro de dépôt international: PCT/FR2019/052997
(87) Numéro de publication internationale: WO 2020/128225

(56) Documents cités:
- WO-A1-2019/115917
- FR-A1- 2 638 398
- GB-A- 2 299 554
- JP-A- 2015 077 922
- US-A1- 2005 279 438

## Description

L'invention a pour objet un pneumatique radial destiné à équiper un véhicule.

Le domaine de pneumatique plus particulièrement étudié est celui des pneumatiques de tourisme dont la section méridienne est caractérisée par une largeur de section S et une hauteur de section H, au sens de la norme de la European Tyre and Rim Technical Organisation ou «ETRTO», telles que le rapport H/S, exprimé en pourcentage, est au plus égal à 65, et la largeur de section S est au moins égale à 195 mm. En outre le diamètre au seat D, définissant le diamètre de la jante de montage du pneumatique, est au moins égal à 15 pouces, et généralement au plus égal à 21 pouces. L'exemple plus particulièrement étudié, dans le cadre de l'invention, est un pneumatique de dimension 255/35R19.

Toutefois un pneumatique selon l'invention peut également être utilisé sur tout autre type de véhicule tel qu'un véhicule à deux roues, un véhicule poids lourd, agricole, de génie civil ou un avion et, plus généralement, sur tout dispositif roulant.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur», respectivement «radialement extérieur», on entend «plus proche de l'axe de rotation du pneumatique», respectivement «plus éloigné de l'axe de rotation du pneumatique». Par «axialement intérieur», respectivement «axialement extérieur», on entend «plus proche du plan équatorial du pneumatique», respectivement «plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend un sommet ayant deux extrémités axiales prolongées chacune, radialement vers l'intérieur, par un flanc puis par un bourrelet destiné à entrer en contact avec une jante, l'ensemble délimitant une cavité torique intérieure. Plus précisément le sommet comprend, radialement de l'extérieur vers l'intérieur, une bande de roulement, destinée à entrer en contact avec le sol par l'intermédiaire d'une surface de roulement, et une armature de sommet destinée à assurer le renforcement du sommet du pneumatique. Une armature de carcasse relie les deux flancs entre eux et est ancrée, dans chaque bourrelet, à un élément circonférentiel de renforcement, le plus souvent de type tringle.

Les normes relatives au pneumatique, telles que, par exemple, celles de l'ETRTO, définissent des conditions d'usage nominales pour un pneumatique de dimension donnée, caractérisé par une largeur de section S, une hauteur de section H et un diamètre au seat D. Ainsi un pneumatique de dimension donnée est destiné à être monté sur une jante nominale, à être gonflé à une pression nominale P et à être soumis à une charge nominale Z. La charge appliquée sur le pneumatique est ainsi reprise par le pneumatique, grâce à sa rigidité pneumatique, résultant de la pression de gonflage, et grâce à sa rigidité structurelle intrinsèque.

Un pneumatique doit satisfaire un ensemble de performances, telles que, à titre d'exemples et de façon non exhaustive, le comportement, la résistance au roulement, l'adhérence, l'usure et le bruit, ce qui implique souvent des choix de conception antinomiques. Il est ainsi fréquent que des choix de conception pour l'amélioration d'une performance donnée entrainent la dégradation d'une autre performance. C'est le cas, par exemple, pour la recherche d'un compromis satisfaisant entre le comportement et la résistance au roulement.

Il est connu que le comportement d'un pneumatique, qui caractérise son aptitude à supporter les diverses sollicitations mécaniques auxquelles il est soumis en roulage, telles que les sollicitations en dérive et/ou les sollicitations transversales, dépend essentiellement de ses rigidités mécaniques respectivement de dérive D_{Z} et transversale Kyy. Le comportement du pneumatique est d'autant meilleur que ces rigidités mécaniques sont élevées.

Dans l'état de la technique, pour améliorer le comportement du pneumatique, l'homme du métier a conçu, par exemple, des bourrelets de pneumatique à forte rigidité, ayant un volume important, résultant d'une épaisseur axiale et/ou d'une hauteur radiale élevée, et comprenant des matériaux élastomériques ayant un module d'élasticité et une hystérèse élevés, c'est-à-dire des matériaux à la fois rigides et dissipatifs. Une telle conception a, en contrepartie, augmenté la valeur de la résistance au roulement, donc dégradé la performance en résistance au roulement, et, corrélativement, augmenté la consommation de carburant.

Dans le document WO2017005713, une solution alternative au pneumatique classique a été proposée à travers un dispositif de type pneumatique comprenant deux structures de révolution respectivement radialement extérieure et radialement intérieure, une structure porteuse constituée par des éléments porteurs identiques, en extension en dehors de l'aire de contact avec le sol et en compression dans l'aire de contact, et deux flancs. Les éléments porteurs sont filaires et sont reliés respectivement à la face radialement intérieure de la structure de révolution radialement extérieure par un tissu radialement extérieur et à la face radialement extérieure de la structure de révolution radialement intérieure par un tissu radialement intérieur. En outre, la densité surfacique moyenne D des éléments porteurs par unité de surface de structure de révolution radialement extérieure, exprimée en 1/m², est au moins égale à (S/S_{E})*Z/(A*Fᵣ), où S est la surface, en m², de la face radialement intérieure de la structure de révolution radialement extérieure, S_{E} est la surface de liaison, en m², du tissu radialement extérieur avec la face radialement intérieure de la structure de révolution radialement extérieure, Z est la charge radiale nominale, en N, A est la surface de contact au sol, en m², et Fᵣ la force à rupture, en N, d'un élément porteur. Cette solution permet de supprimer les bourrelets dissipatifs d'un pneumatique classique, donc de réduire la résistance au roulement de façon drastique, tout en garantissant un bon comportement grâce à la reprise des sollicitations mécaniques de dérive et transversales par les éléments filaires de la structure porteuse. Toutefois, ce dispositif pneumatique présente en particulier l'inconvénient de nécessiter l'utilisation d'une jante non standard.

Un autre pneumatique est connu de FR 2 638 398 A1 sur lequel est basé le préambule de la revendication 1 annexée.

D'autres pneumatiques sont également connus de JP 2015 077922 A, de US 2005/279438 A1 et de GB 2 299 554 A.

Le document WO 2019/115917 A1 est un document de l'état de la technique selon l'Article 54(3) CBE.

Les inventeurs se sont donnés pour objectif de concevoir un pneumatique, apte à être monté sur une jante standard, avec un comportement amélioré par rapport à un pneumatique standard de l'état de la technique, et avec une résistance au roulement au plus égale à celle de ce pneumatique de référence.

Cet objectif a été atteint pour un pneumatique pour véhicule selon la revendication 1.

Le principe de l'invention est d'implanter, dans un pneumatique classique, une structure de rigidification destinée à augmenter la rigidité globale du pneumatique, celle-ci ayant une composante structurelle, appelée rigidité structurelle et apportée par la structure de renforcement du pneumatique, et une composante pneumatique, appelée rigidité pneumatique et apportée par la pression du gaz de gonflage. La structure de rigidification apporte une contribution à la rigidité pneumatique.

Plus précisément, la structure de rigidification selon l'invention permet d'augmenter simultanément la rigidité radiale K_{ZZ}, la rigidité transversale ou axiale Kyy, et la rigidité de dérive D_{Z} du pneumatique, par rapport au pneumatique de référence. La rigidité radiale K_{ZZ}, exprimée en daN/mm, est la force radiale F_{Z} générée par le pneumatique lors de l'application d'un déplacement radial égal à 1 mm. La rigidité transversale ou axiale Kyy, exprimée en daN/mm, est la force axiale Fy générée par le pneumatique lors de l'application d'un déplacement axial égal à 1 mm. Enfin la rigidité de dérive D_{Z}, exprimée en daN/°, est la force axiale F_{Y} générée par le pneumatique lors d'un roulage avec un angle de 1° appliqué autour d'un axe radial ZZ'.

En augmentant la rigidité radiale K_{ZZ}, la structure de rigidification limite les déformations radiales du sommet, lors du roulage, et, en particulier, la contre-flèche, c'est-à-dire la déformation radiale, à l'opposé de l'aire de contact de la surface de roulement du pneumatique avec le sol. Ainsi, au cours du roulage du pneumatique, au tour de roue, la structure de rigidification permet de limiter l'amplitude des déformations cycliques du pneumatique, et en particulier de sa bande de roulement, et donc de limiter la dissipation d'énergie résultante, ce qui contribue à la diminution de la résistance au roulement. En outre, sous sollicitation radiale, l'aire de contact avec le sol n'est pas modifiée, c'est-à-dire conserve sensiblement la même surface, ce qui permet de conserver la même performance en adhérence que pour le pneumatique de référence.

En augmentant la rigidité transversale ou axiale Kyy et de rigidité de dérive D_{Z}, la structure de rigidification va contribuer à l'amélioration du comportement, sous sollicitation transversale, par exemple lors d'un roulage en dérive. En outre, sous sollicitation transversale, l'aire de contact avec le sol garantit une répartition plus homogène des pressions de contact, ce qui permet d'augmenter la performance en adhérence transversale.

Par ailleurs la structure de rigidification participe au moins partiellement au port de la charge appliquée au pneumatique, de telle sorte que cette charge appliquée est reprise conjointement par le pneumatique, grâce à sa rigidité pneumatique et à sa rigidité structurelle intrinsèque, et par la structure de rigidification. Concernant le port de charge, lorsque le pneumatique est soumis à une charge radiale nominale Z, la portion de structure de rigidification, reliée à la portion de pneumatique en contact avec le sol, est soumise à un flambage en compression et la portion de structure de rigidification, reliée à la portion de pneumatique non en contact avec le sol, est au moins en partie en tension.

Par conséquent, la présence d'une structure de rigidification permet de diminuer la contribution de l'armature de renforcement du pneumatique au port de la charge et donc autorise, le cas échéant, une diminution de sa rigidité structurelle intrinsèque, par exemple en réduisant le volume des bourrelets. Les bourrelets d'un pneumatique classique dissipant, de façon connue, une quantité d'énergie significative, du fait de leur volume et du caractère hystérétique de leur mélange élastomérique constitutif, réduire leur volume permettrait ainsi de réduire de façon significative la résistance au roulement.

Sur un plan structurel, selon l'invention, la structure de rigidification comprend deux éléments de rigidification s'étendant continûment dans la cavité torique intérieure, à partir d'une interface de sommet, reliée à une face radialement intérieure du sommet, jusqu'à une interface de bourrelet, reliée à une face axialement intérieure de bourrelet. En d'autres termes, la structure de rigidification comprend deux éléments de rigidification reliant le sommet du pneumatique à un bourrelet, ce qui crée une triangulation entre le sommet du pneumatique et chaque bourrelet. Les liaisons respectives de l'élément de rigidification avec le sommet et le bourrelet peuvent être soit directes, soit indirectes, par exemple par l'intermédiaire d'un moyen d'accrochage.

En outre la structure de rigidification est répartie circonférentiellement sur toute la circonférence du pneumatique. Plus précisément, la structure de rigidification soit s'étend circonférentiellement et continûment sur toute la circonférence du pneumatique, soit est répartie circonférentiellement et périodiquement sur toute la circonférence du pneumatique. Par conséquent la triangulation entre le sommet et les bourrelets du pneumatique est effective sur toute la circonférence du pneumatique.

Également selon l'invention, l'interface de sommet de l'élément de rigidification est positionnée, par rapport au plan équatorial, à une distance axiale A au plus égale à 0.45 fois la largeur axiale S. Au-delà de cette valeur, l'élément de rigidification a une direction formant un angle trop faible par rapport à la direction radiale ZZ', ce qui apporte une contribution insuffisante aux rigidités respectivement transversale Kyy et de dérive D_{Z}. Toutefois, même dans le cas d'un angle proche de 0°, les inventeurs ont pu constater une augmentation des rigidités respectivement radiale K_{ZZ}, transversale Kyy et de dérive D_{Z}.

Encore selon l'invention, l'interface de bourrelet de l'élément de rigidification est positionnée, par rapport à un point le plus radialement intérieur de la face axialement intérieure de bourrelet, à une distance radiale B au moins égale à 0.10 fois la hauteur radiale H et au plus égale à 0.5 fois la hauteur radiale H. Au-delà de 0.5 fois la hauteur radiale H, tout élément de rigidification a une direction formant un angle trop important par rapport à la direction radiale ZZ', ce qui apporte une contribution insuffisante à la rigidité radiale K_{ZZ}. En dessous de 0.10 fois la hauteur radiale H, l'interface de bourrelet est positionnée dans une zone rigide du bourrelet, au voisinage de la tringle, ce qui favorise la transmission du bruit entre le sommet du pneumatique en contact avec le sol et le bourrelet en contact avec la jante. Le choix de la distance radiale B résulte donc d'un compromis entre la recherche de rigidités respectivement radiale, transversale et de dérive suffisantes, par une inclinaison adaptée de l'élément de rigidification par rapport au plan équatorial, et la recherche d'un niveau de bruit acceptable, en évitant de positionner l'interface de bourrelet dans la zone rigide du bourrelet. De plus, un positionnement radial de l'interface de bourrelet suffisamment élevé permet d'être plus tolérant aux variations de longueur de l'élément de rigidification, grâce à un positionnement de cette interface dans une zone du pneumatique moins rigide que celle du bourrelet.

Préférentiellement, les deux éléments de rigidification sont positionnés symétriquement de part et d'autre du plan équatorial. Ce mode de réalisation permet de répartir de manière équilibrée les efforts passant par la structure de rigidification entre les deux moitiés du pneumatique, et donc d'avoir un comportement symétrique du pneumatique en roulage. Par ailleurs, la fabrication d'une structure de rigidification symétrique est plus simple.

Avantageusement l'interface de sommet est positionnée, par rapport au plan équatorial, à une distance axiale A au moins égale à 0.05 fois et au plus égale à 0.15 fois la largeur axiale S. Les inventeurs ont en effet montré qu'une distance axiale A sensiblement égale à 0.10 fois la largeur axiale S était un mode de réalisation avantageux.

Préférentiellement l'interface de bourrelet est positionnée, par rapport à un point le plus radialement intérieur de la face axialement intérieure de bourrelet, à une distance radiale B au plus égale à 0.35 fois la hauteur radiale H. Selon les inventeurs une plage de valeurs pour la distance radiale B comprise entre 0.1 fois et 0.35 fois la hauteur radiale H est optimale vis-à-vis du compromis entre respectivement les performances de comportement et de bruit.

L'interface de sommet est avantageusement répartie sur une largeur A1 au moins égale à 0.1 fois la largeur axiale S. En dessous de cette valeur, les contraintes locales, au niveau de l'interface de sommet, deviennent trop élevées, d'où un risque d'arrachement de l'interface de sommet.

Selon une alternative de l'invention, combinable avec l'alternative décrite ci-dessous, l'interface de sommet comprend un coussin en mélange élastomérique, positionné au moins en partie entre l'élément de rigidification et la face radialement intérieure du sommet. La présence d'un coussin élastomérique au niveau de l'interface de sommet permet de mieux répartir les contraintes locales d'interface.

L'interface de sommet étant répartie sur une largeur A1, l'interface de bourrelet est avantageusement répartie sur une largeur B1 au moins égale à la largeur A1. En effet, l'interface de bourrelet doit transmettre les mêmes efforts de tension que l'interface de sommet, puisque ces deux interfaces sont les deux extrémités d'un élément de rigidification fonctionnant en tension, mais avec une inclinaison plus importante de l'élément de rigidification par rapport à la surface d'accrochage, d'où un effort normal d'arrachement plus important au niveau du bourrelet. Il est par conséquent nécessaire de répartir suffisamment cet effort normal.

Selon une alternative de l'invention combinable avec l'alternative décrite ci-dessus, l'interface de bourrelet comprend un coussin en mélange élastomérique, en contact au moins en partie avec l'élément de rigidification et la face axialement intérieure de bourrelet. La présence d'un coussin élastomérique au niveau de l'interface de bourrelet permet de mieux répartir les contraintes locales d'interface.

Selon une variante du mode de réalisation préféré de l'interface de bourrelet, le coussin en mélange élastomérique de l'interface de bourrelet est au moins en partie en contact avec une couche de renforcement, de telle sorte que le coussin est délimité par l'élément de rigidification, la face axialement intérieure de bourrelet et la couche de renforcement. La présence d'une couche de renforcement, délimitant le coussin radialement vers l'extérieur, permet d'avoir un ancrage de l'élément de rigidification plus symétrique comprenant deux éléments de couches de renforcement de part et d'autre du plan moyen de l'élément de rigidification. Cette couche de renforcement permet en outre de limiter les déformations du coussin élastomérique, et donc la dissipation d'énergie dans ce coussin, ce qui contribue à diminuer la résistance au roulement.

Concernant les matériaux constitutifs de la structure de rigidification, tout élément de rigidification comprend avantageusement un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux. Les matériaux polymériques, en particulier les matériaux élastomériques, et les matériaux métalliques, tels que l'acier, sont couramment utilisés dans le domaine du pneumatique. Le verre et le carbone sont des matériaux alternatifs envisageables pour une utilisation en pneumatique. Dans une première variante de matériau, tout élément de rigidification comprend avantageusement du polyéthylène téréphtalate (PET). Le PET est couramment utilisé dans le domaine du pneumatique, en raison d'un bon compromis entre ses propriétés mécaniques, telles que sa résistance à la rupture en traction, et son coût. Dans une seconde variante de matériau, tout élément de rigidification comprend également avantageusement un polyamide aliphatique, tel que du nylon. Le nylon est également couramment utilisé dans le domaine du pneumatique pour les mêmes raisons que le PET.

Dans un mode de réalisation avantageux, l'élément de rigidification n'est pas étanche. Ainsi, l'élément de rigidification laisse passer le gaz de gonflage de part et d'autre de l'élément de rigidification. Par conséquent, l'élément de rigidification ne délimite pas une cavité secondaire sous pression du pneumatique. Par pas étanche, on comprendra que l'élément de rigidification n'est pas étanche à un gaz de gonflage du pneumatique et donc perméable à ce gaz de gonflage de façon à ce que la pression soit homogène dans la cavité torique intérieure à tout moment.

Selon un mode de réalisation préféré de l'élément de rigidification, chaque élément de rigidification comprend des éléments de renforcement filaires, enrobés, au moins au voisinage des interfaces respectivement de sommet et de bourrelet, dans un mélange élastomérique, de telle sorte que l'élément de rigidification n'est pas étanche. Les éléments de renforcement filaires ou encore unidimensionnels ont un comportement mécanique de type filaire, c'est-à-dire qu'ils ne peuvent être soumis qu'à des efforts d'extension ou de compression selon leurs lignes moyennes. Le plus souvent, les éléments de renforcement filaires sont des renforts textiles, constitués par un assemblage de filés textiles en matériau polymérique, tel qu'un polyamide aliphatique, un polyamide aromatique ou un polyester, ou des câbles métalliques, constitués par un assemblage de fils métalliques généralement en acier. Par ailleurs, les éléments de renforcement filaires sont au moins en partie non enrobés, sauf au voisinage des interfaces de sommet et de bourrelet, ou sont enrobés par un mélange élastomérique comprenant des trous, de façon à, comme déjà décrit ci-dessus, laisser passer le gaz de gonflage de part et d'autre de l'élément de rigidification. Autrement dit, les éléments de renforcement filaires ne sont pas intégralement enrobés d'un mélange élastomérique, comme dans les tissus de renforcement usuellement utilisés dans le domaine du pneumatique. Par conséquent, comme déjà décrit ci-dessus, l'élément de rigidification ne délimite pas une cavité secondaire sous pression du pneumatique.

Selon une première variante du mode de réalisation préféré de l'élément de rigidification, chaque élément de rigidification est constitué par une famille d'éléments de renforcement filaires, parallèles entre eux, et formant, avec une direction circonférentielle, un angle C1 au moins égal à 85° et au plus égal à 95°. Dans cette première variante, l'élément de rigidification comprend donc une seule couche d'éléments de renforcements filaires positionnés dans des plans sensiblement méridiens, un plan méridien étant défini par la direction axiale et une direction radiale.

Selon une deuxième variante du mode de réalisation préféré de l'élément de rigidification, chaque élément de rigidification est constitué par une première famille d'éléments de renforcement filaires, parallèles entre eux, et formant, avec une direction circonférentielle, un angle C1 au moins égal à 45° et au plus égal à 75°, croisée par rapport à une deuxième famille d'éléments de renforcement filaires, parallèles entre eux, et formant, avec une direction circonférentielle, un angle C2 au moins égal à 45° et au plus égal à 75°. Dans cette deuxième variante, l'élément de rigidification comprend donc deux couches d'éléments de renforcements filaires croisés d'une couche à la suivante et significativement inclinés par rapport à la direction circonférentielle, mais pas nécessairement inclinés du même angle. Cette inclinaison significative des éléments de renforcement filaires contribue à une augmentation de la rigidité circonférentielle K_{XX}, correspondant à la force circonférentielle F_{X} générée par le pneumatique lors d'un déplacement circonférentiel égal à 1 mm. Elle permet par conséquent de limiter les déformations de la surface de contact du pneumatique avec le sol lors des sollicitations longitudinales de freinage ou d'accélération.

Concernant cette deuxième variante, les angles C1 et C2 sont encore préférentiellement égaux en valeur absolue et opposés. Dans ce cas particulier, les éléments de renforcements filaires sont inclinés de façon symétrique, par rapport à la direction circonférentielle, d'où une rigidification circonférentielle identique dans les deux sens de roulage du pneumatique.

L'invention est illustrée par les figures ci-dessous référencées, non représentées à l'échelle et décrites ci-après :
- Figure 1 : Coupe méridienne d'un pneumatique selon l'invention.
- Figure 2 : Coupe méridienne d'un pneumatique selon un mode de réalisation préféré de l'invention, avec des coussins élastomériques aux interfaces de sommet et de bourrelet.
- Figure 3 : Vue en perspective d'un mode de réalisation préféré de l'invention, avec des éléments de rigidification comprenant des éléments de renforcement filaires.
- Figure 4 : Elément de rigidification comprenant des éléments de renforcement filaires enrobés, au voisinage des interfaces de sommet et de bourrelet, dans un mélange élastomérique.
- Figure 5 : Elément de rigidification comprenant des éléments de renforcement filaires enrobés dans un mélange élastomérique à trous.
- Figure 6 : Elément de rigidification comprenant une famille d'éléments de renforcement filaires sensiblement radiaux.
- Figure 7 : Elément de rigidification comprenant deux familles d'éléments de renforcement filaires inclinés par rapport à la direction circonférentielle et croisés d'une famille à l'autre.
- Figure 8 : Rigidités radiales K_{ZZ} comparées entre un pneumatique selon l'invention et un pneumatique de référence de l'état de la technique.
- Figure 9 : Rigidités transversales ou axiales K_{YY} comparées entre un pneumatique selon l'invention et un pneumatique de référence de l'état de la technique.

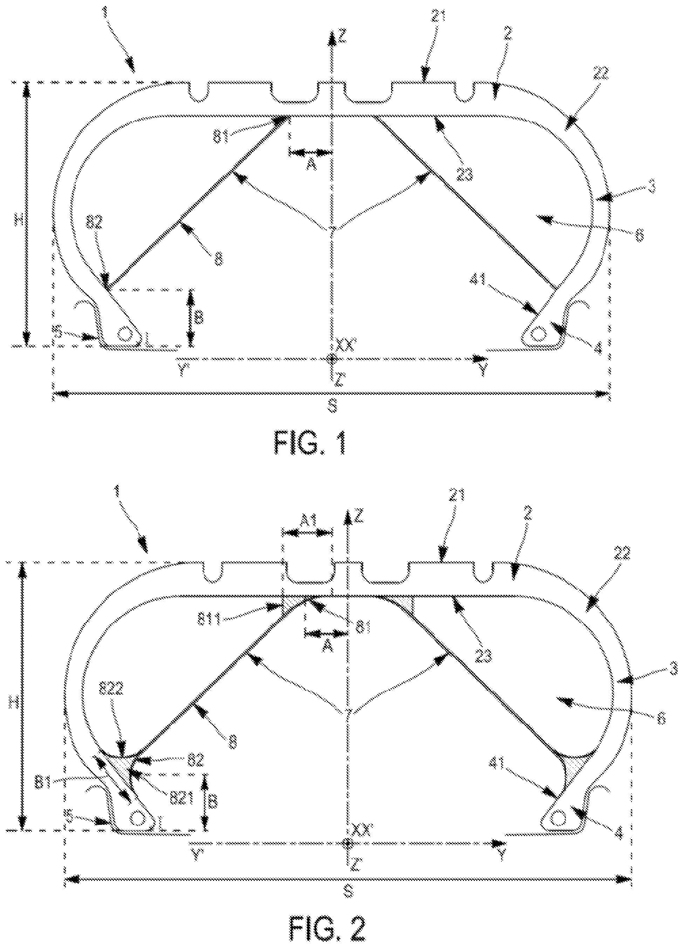

La figure 1 représente une coupe méridienne d'un pneumatique selon l'invention. Le pneumatique 1 est destiné à être monté sur une jante nominale 5 et gonflé à une pression nominale P, et a une largeur axiale S et une hauteur radiale H à l'état monté gonflé. Le pneumatique 1 comprend un sommet 2 ayant une surface de roulement 21 radialement extérieure, destinée à entrer en contact avec un sol, et deux extrémités axiales 22, prolongées chacune radialement vers l'intérieur, par un flanc 3 puis par un bourrelet 4 destiné à entrer en contact avec la jante 5. Le sommet 2, les flancs 3 et les bourrelets 4 délimitent une cavité torique intérieure 6. Le pneumatique 1 a un plan équatorial XZ passant par le milieu de sa surface de roulement 21 et perpendiculaire à un axe de rotation YY'. Selon l'invention, le pneumatique 1 comprend une structure de rigidification 7, comprenant deux éléments de rigidification 8 s'étendant continûment dans la cavité torique intérieure 6, à partir d'une interface de sommet 81, reliée à une face radialement intérieure du sommet 23, jusqu'à une interface de bourrelet 82, reliée à une face axialement intérieure de bourrelet 41. La structure de rigidification 7 est répartie circonférentiellement sur toute la circonférence du pneumatique. Les deux éléments de rigidification 8, constitutifs de la structure de rigidification 7, sont non liés entre eux à l'intérieur de la cavité torique intérieure 6, s'étendent continûment dans la cavité torique intérieure 6 sans couper le plan équatorial XZ et sont symétriques par rapport au plan équatorial XZ. L'interface de sommet 81 d'élément de rigidification 8 est positionnée, par rapport au plan équatorial XZ, à une distance axiale A au plus égale à 0.45 fois la largeur axiale S. L'interface de bourrelet 82 d'élément de rigidification 8 est positionnée, par rapport à un point I le plus radialement intérieur de la face axialement intérieure de bourrelet 41, à une distance radiale B au moins égale à 0.10 fois la hauteur radiale H et au plus égale à 0.5 fois la hauteur radiale H.

La figure 2 représente une coupe méridienne d'un pneumatique selon un mode de réalisation préféré de l'invention, avec des coussins élastomériques aux interfaces de sommet et de bourrelet. Les éléments supplémentaires par rapport à la figure 1 sont décrits ci-après. L'interface de sommet 81 est répartie sur une largeur A1 au moins égale à 0.1 fois la largeur axiale S et comprend un coussin 811 en mélange élastomérique, positionné au moins en partie entre l'élément de rigidification 8 et la face radialement intérieure du sommet 23. L'interface de bourrelet 82 est répartie sur une largeur B1 au moins égale à la largeur A1 et comprend un coussin 821 en mélange élastomérique, en contact au moins en partie avec l'élément de rigidification 8 et la face axialement intérieure de bourrelet 41. Enfin le coussin 821 en mélange élastomérique de l'interface de bourrelet 82 est au moins en partie en contact avec une couche de renforcement 822, de telle sorte que le coussin 821 est délimité par l'élément de rigidification 8, la face axialement intérieure de bourrelet 41 et la couche de renforcement 822.

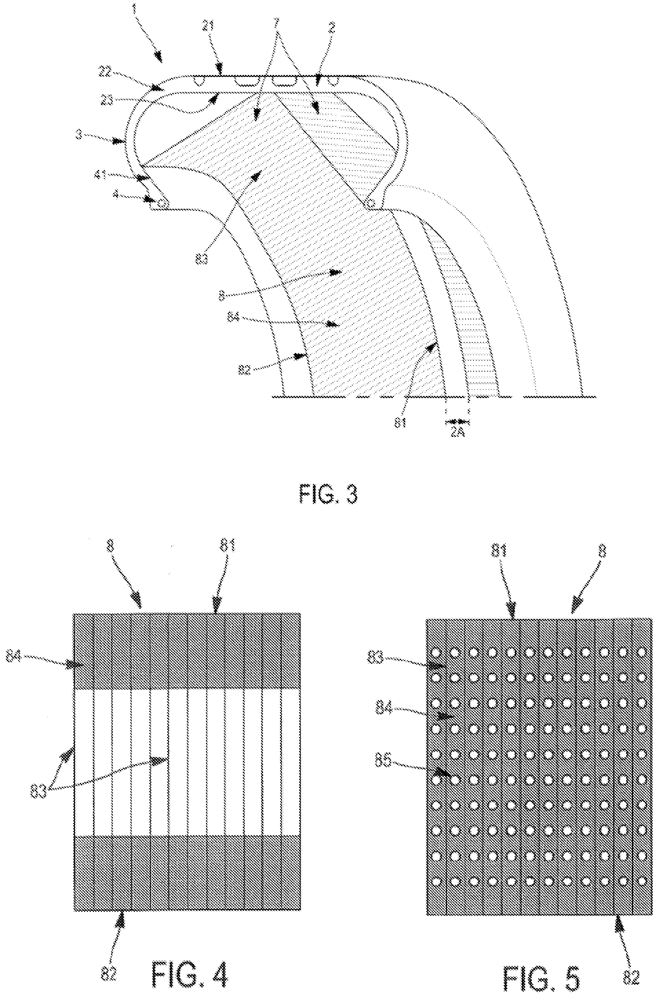

La figure 3 représente une vue en perspective d'un mode de réalisation préféré de l'invention, avec des éléments de rigidification comprenant des éléments de renforcement filaires. La structure de rigidification 7 est constituée par deux éléments de rigidification 8 comprenant des éléments de renforcement filaires 83, s'étendant continûment dans la cavité torique intérieure, à partir d'une interface de sommet 81, reliée à une face radialement intérieure du sommet 23, jusqu'à une interface de bourrelet 82, reliée à une face axialement intérieure de bourrelet 41. L'élément de rigidification 8 n'est pas étanche. En l'espèce, les éléments de renforcement filaires 83 sont enrobés, au moins au voisinage des interfaces respectivement de sommet 81 et de bourrelet 82, dans un mélange élastomérique 84, de telle sorte que l'élément de rigidification 8 n'est pas étanche.

La figure 4 représente un élément de rigidification comprenant des éléments de renforcement filaires enrobés, au voisinage des interfaces de sommet et de bourrelet, dans un mélange élastomérique. L'élément de rigidification 8 comprend des éléments de renforcement filaires 83, enrobés, au voisinage des interfaces respectivement de sommet 81 et de bourrelet 82, dans un mélange élastomérique 84, de telle sorte que l'élément de rigidification 8 n'est pas étanche. Par conséquent, la pression du gaz de gonflage est identique de part et d'autre de l'élément de rigidification 8 qui ne délimite donc pas une cavité secondaire avec une pression différente de celle de la cavité principale.

La figure 5 représente un élément de rigidification comprenant des éléments de renforcement filaires enrobés dans un mélange élastomérique à trous. L'élément de rigidification 8 comprend des éléments de renforcement filaires 83, enrobés sur toute leur longueur entre les interfaces respectivement de sommet 81 et de bourrelet 82, dans un mélange élastomérique 84 comprenant des trous, de telle sorte que l'élément de rigidification 8 n'est pas étanche. C'est un autre mode de réalisation d'un élément de rigidification non étanche.

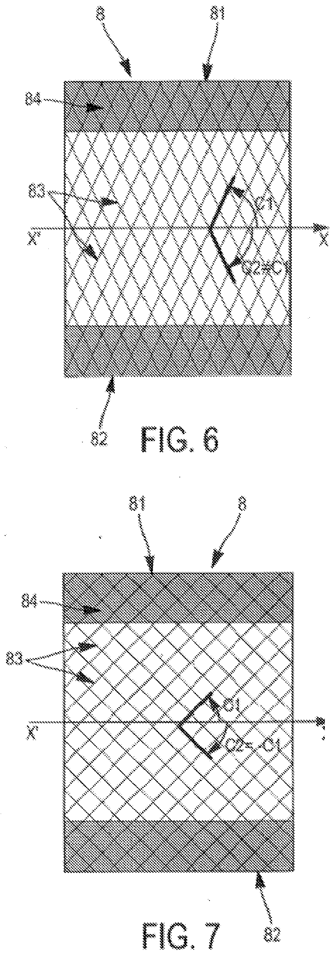

La figure 6 représente un élément de rigidification comprenant une famille d'éléments de renforcement filaires sensiblement radiaux. L'élément de rigidification 8 est constitué par une famille d'éléments de renforcement filaires 83, parallèles entre eux, et formant, avec une direction circonférentielle XX', un angle C1 au moins égal à 85° et au plus égal à 95°. Les éléments de renforcement filaires 83 sont tous enrobés, au voisinage des interfaces respectivement de sommet 81 et de bourrelet 82, dans un mélange élastomérique 84, de telle sorte que l'élément de rigidification 8 n'est pas étanche.

La figure 7 représente un élément de rigidification comprenant deux familles d'éléments de renforcement filaires inclinés par rapport à la direction circonférentielle et croisés d'une famille à l'autre. L'élément de rigidification 8 est constitué par une première famille d'éléments de renforcement filaires 83, parallèles entre eux, et formant, avec une direction circonférentielle XX', un angle C1 au moins égal à 45° et au plus égal à 75°, croisée par rapport à une deuxième famille d'éléments de renforcement filaires 83, parallèles entre eux, et formant, avec une direction circonférentielle XX', un angle C2 au moins égal à 45° et au plus égal à 75°. Dans le cas représenté, les angles C1 et C2 sont égaux en valeur absolue et opposés, c'est-à-dire symétriques par rapport à la direction circonférentielle XX'. Les éléments de renforcement filaires 83 sont tous enrobés, au voisinage des interfaces respectivement de sommet 81 et de bourrelet 82, dans un mélange élastomérique 84, de telle sorte que l'élément de rigidification 8 n'est pas étanche.

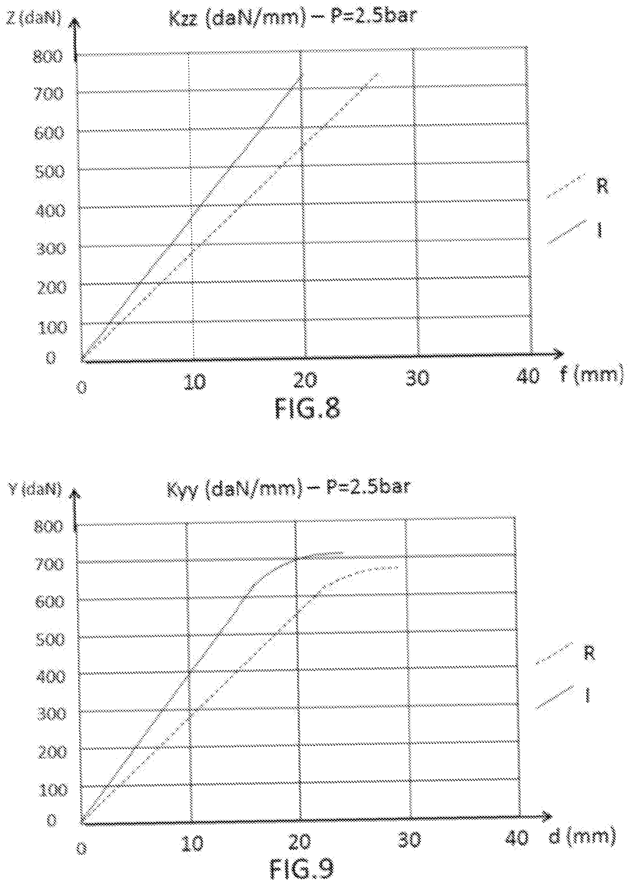

La figure 8 est un graphe présentant les rigidités radiales K_{ZZ} comparées entre un pneumatique selon l'invention et un pneumatique de référence de l'état de la technique. Pour une pression de gonflage P et une flèche radiale f données, l'effort radial Z généré par le pneumatique selon l'invention est plus élevé que celui généré par le pneumatique de référence. La pente de la courbe d'effort radial Z en fonction de la flèche radiale f du pneumatique, c'est-à-dire du déplacement radial du sommet du pneumatique, représente la rigidité radiale K_{ZZ} du pneumatique. Par conséquent, la rigidité radiale K_{ZZ} du pneumatique selon l'invention est plus élevée que celle du pneumatique de référence.

La figure 9 est un graphe présentant les rigidités transversales ou axiales K_{YY} comparées entre un pneumatique selon l'invention et un pneumatique de référence de l'état de la technique. Pour une pression de gonflage P, une flèche radiale f et un déport transversal d donnés, l'effort transversal Y généré par le pneumatique selon l'invention est plus élevé que celui généré par le pneumatique de référence. La pente de la portion sensiblement linéaire de la courbe d'effort transversal Y en fonction du déport transversal d du pneumatique, c'est-à-dire de son déplacement transversal, représente la rigidité transversale Kyy du pneumatique. La portion sensiblement linéaire de la courbe d'effort transversal Y correspond, dans le cas représenté, à un déport transversal au plus égal à environ 20 mm. Par conséquent, la rigidité transversale K_{YY} du pneumatique selon l'invention est plus élevée que celle du pneumatique de référence. Au-delà de 20 mm de déport transversal, l'effort transversal Y atteint un palier en raison du glissement de la surface de roulement du pneumatique sur le sol. Dans le cas de l'invention, cette stabilisation de l'effort transversal Y s'opère à un niveau plus élevé, au-delà de 25 mm, en raison d'une rigidité transversale K_{YY} plus élevée permettant de conserver une répartition plus homogène de la pression dans l'aire de contact, sous effort transversal Y.

L'invention a été plus particulièrement étudiée pour un pneumatique de tourisme de dimension 255/35R19. Un pneumatique de référence R a ainsi été comparé à un premier exemple de pneumatique I1 selon l'invention, avec des interfaces de sommet et de bourrelet conformes à la figure 2, et comprenant deux éléments de rigidification constitués par une famille d'éléments de renforcement filaires de type câbles, parallèles entre eux, et formant, avec la direction circonférentielle, un angle C1 sensiblement égal à 90° conformément la figure 4. Il a également été comparé à un deuxième exemple de pneumatique I2 selon l'invention, avec des interfaces de sommet et de bourrelet conformes à la figure 2, et comprenant deux éléments de rigidification constitués par une première famille d'éléments de renforcement filaires de types câbles, parallèles entre eux, et formant, avec une direction circonférentielle, un angle C1 égal à 60°, croisée par rapport à une deuxième famille d'éléments de renforcement filaires de types câbles, parallèles entre eux, et formant, avec la direction circonférentielle, un angle C2 égal l'angle C1 en valeur absolue mais opposé conformément à la figure 7.

Les pneumatiques respectivement de référence R, selon l'invention I1 et selon l'invention I2, sont montés sur une jante nominale 9J19 et gonflés à une pression nominale P égale à 2.5 bars. Leurs largeurs axiales S et leurs hauteurs radiales H respectives, à l'état monté et gonflé, sont respectivement égales à 255 mm et 89 mm.

Le premier exemple I1 est caractérisé par une structure de rigidification, telle que représentée sur la figure 2, avec deux éléments de rigidification symétriques par rapport au plan équatorial du pneumatique. Chaque élément de rigidification est composé d'une juxtaposition d'éléments de renforcements filaires de type câbles, ayant une section égale à 0.8 mm², parallèles entre eux et répartis selon un pas égal à 1.25 mm. Le matériau constitutif des éléments de rigidification est un tissu constitué de renforts textiles en polyester (ou PET) enrobés au voisinage des interfaces de sommet et de bourrelet par un mélange élastomérique. Les renforts textiles sont positionnés dans des plans sensiblement méridiens du pneumatique. Les interfaces de sommet et de bourrelet sont respectivement réparties sur des largeurs axiales A1, comprise entre 0.1 fois et 0.15 fois la largeur axiale S du pneumatique, et B1, comprise entre 0.25 fois et 0.3 fois la hauteur radiale H du pneumatique. En outres elles comprennent respectivement des cousins élastomériques, positionnés entre l'élément de rigidification et la paroi d'accrochage. Par ailleurs les interfaces de sommet et de bourrelet sont réalisées par vulcanisation à chaud.

Le deuxième exemple I2 diffère du premier exemple I1 par la constitution des deux éléments de rigidification, constitués chacun par deux familles d'éléments de renforcements filaires de type câbles, croisée l'une par rapport à l'autre, en formant, avec la direction circonférentielle, deux angles C1 et C2 égaux en valeur absolue à 60° et opposés.

Le tableau 1 ci-dessous résume les écarts de performances obtenus respectivement entre le premier exemple de pneumatique I1 et le pneumatique de référence R, et le deuxième exemple de pneumatique I2 et le pneumatique de référence :

**Tableau 1**

| Caractéristiques de performance | Ecarts de performance du pneumatique I1 par rapport au pneumatique R | Ecarts de performance du pneumatique I2 par rapport au pneumatique R |
|---|---|---|
| Rigidité radiale K_{ZZ} | Pas d'écart | +20% |
| Rigidité transversale K_{YY} | +70% | +85% |
| Résistance au roulement (calculée) | -0.8kg/t | Non déterminé |
| Bruit interieur véhicule | Pas d'écart | Non déterminé |

Les résultats du tableau 1 montrent un compromis de performances amélioré entre la résistance au roulement et le comportement pour l'invention. Il est à noter que ce compromis est modulable. En effet, la précontrainte appliquée aux éléments de rigidification lors du gonflage du pneumatique peut être modulée, d'où une modulation des rigidités, et en particulier de la rigidité transversale Kyy, en fonction du niveau de précontrainte.

## Revendications

1. **-** Pneumatique (1) pour véhicule, destiné à être monté sur une jante nominale (5) et gonflé à une pression nominale P, ayant une largeur axiale S et une hauteur radiale H à l'état monté gonflé, et comprenant:
- un sommet (2) ayant une surface de roulement (21) radialement extérieure, destinée à entrer en contact avec un sol, et deux extrémités axiales (22), prolongées chacune radialement vers l'intérieur, par un flanc (3) puis par un bourrelet (4) destiné à entrer en contact avec la jante (5),
- le sommet (2), les flancs (3) et les bourrelets (4) délimitant une cavité torique intérieure (6),
- le pneumatique (1) ayant un plan équatorial (XZ) passant par le milieu de sa surface de roulement (21) et perpendiculaire à un axe de rotation (YY'), **caractérisé en ce que** le pneumatique (1) comprend une structure de rigidification (7) comprenant deux éléments de rigidification (8), chacun s'étendant continûment dans la cavité torique intérieure (6), à partir d'une interface de sommet (81), reliée à une face radialement intérieure du sommet (23), jusqu'à une interface de bourrelet (82), reliée à une face axialement intérieure de bourrelet (41), **en ce que** la structure de rigidification (7) est répartie circonférentiellement sur toute la circonférence du pneumatique, **en ce que** l'interface de sommet (81) est positionnée, par rapport au plan équatorial (XZ), à une distance axiale A au plus égale à 0.45 fois la largeur axiale S **en ce que** l'interface de bourrelet (82) est positionnée, par rapport à un point (I) le plus radialement intérieur de la face axialement intérieure de bourrelet (41), à une distance radiale B au moins égale à 0.10 fois la hauteur radiale H et au plus égale à 0.5 fois la hauteur radiale H, et **en ce que** l'interface de sommet (81) comprend un coussin (811) en mélange élastomérique, positionné au moins en partie entre l'élément de rigidification (8) et la face radialement intérieure du sommet (23), et/ou l'interface de bourrelet (82) comprend un coussin (821) en mélange élastomérique, en contact au moins en partie avec l'élément de rigidification (8) et la face axialement intérieure de bourrelet (41).

2. - Pneumatique selon la revendication précédente, **dans lequel** les deux éléments de rigidification (8) sont positionnés symétriquement de part et d'autre du plan équatorial (XZ).

3. - Pneumatique selon l'une quelconque des revendications précédentes, **dans lequel** l'interface de sommet (81) est positionnée, par rapport au plan équatorial (XZ), à une distance axiale A au moins égale à 0.05 fois et au plus égale à 0.15 fois la largeur axiale S.

4. - Pneumatique selon l'une quelconque des revendications précédentes, **dans lequel** l'interface de bourrelet (82) est positionnée, par rapport à un point (I) le plus radialement intérieur de la face axialement intérieure de bourrelet (41), à une distance radiale B au plus égale à 0.35 fois la hauteur radiale H.

5. - Pneumatique selon l'une quelconque des revendications précédentes, **dans lequel** l'interface de sommet (81) est répartie sur une largeur A1 au moins égale à 0.1 fois la largeur axiale.

6. - Pneumatique selon l'une quelconque des revendications précédentes, **dans lequel** les deux éléments de rigidification (8) sont non liés entre eux à l'intérieur de la cavité torique intérieure (6).

7. - Pneumatique selon l'une quelconque des revendications précédentes, l'interface de sommet (81) étant répartie sur une largeur A1, **dans lequel** l'interface de bourrelet (82) est répartie sur une largeur B1 au moins égale à la largeur A1.

8. - Pneumatique selon l'une quelconque des revendications précédentes, **dans lequel** le coussin (821) en mélange élastomérique de l'interface de bourrelet (82) est au moins en partie en contact avec une couche de renforcement (822), de telle sorte que le coussin (821) est délimité par l'élément de rigidification (8), la face axialement intérieure de bourrelet (41) et la couche de renforcement (822).

9. - Pneumatique selon l'une quelconque des revendications précédentes, **dans lequel** tout élément de rigidification (8) comprend un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux.

10. - Pneumatique selon l'une quelconque des revendications précédentes, **dans lequel** l'élément de rigidification (8) n'est pas étanche.

11. - Pneumatique selon l'une quelconque des revendications précédentes, **dans lequel** chaque élément de rigidification (8) comprend des éléments de renforcement filaires (83), enrobés, au moins au voisinage des interfaces respectivement de sommet (81) et de bourrelet (82), dans un mélange élastomérique (84), de telle sorte que l'élément de rigidification (8) n'est pas étanche.

12. - Pneumatique selon la revendication 11, **dans lequel** chaque élément de rigidification (8) est constitué par une famille d'éléments de renforcement filaires (83), parallèles entre eux, et formant, avec une direction circonférentielle (XX'), un angle C1 au moins égal à 85° et au plus égal à 95°.

13. - Pneumatique selon la revendication 11, **dans lequel** chaque élément de rigidification (8) est constitué par une première famille d'éléments de renforcement filaires (83), parallèles entre eux, et formant, avec une direction circonférentielle (XX'), un angle C1 au moins égal à 45° et au plus égal à 75°, croisée par rapport à une deuxième famille d'éléments de renforcement filaires (83), parallèles entre eux, et formant, avec une direction circonférentielle (XX'), un angle C2 au moins égal à 45° et au plus égal à 75°.

14. - Pneumatique selon la revendication précédente, **dans lequel** les angles C1 et C2 sont égaux en valeur absolue et opposés.

## Patentansprüche

1. **-** Fahrzeugreifen (1), der dazu bestimmt ist, auf einer Nennfelge (5) montiert und mit einem Nenndruck P befüllt zu werden, eine axiale Breite S und eine radiale Höhe H im montierten und befüllten Zustand aufweist und umfasst:
- eine Krone (2) mit einer radial äußeren Lauffläche (21), die dazu bestimmt ist, mit einem Boden in Kontakt zu kommen, und zwei axialen Enden (22), die jeweils radial nach innen durch eine Seitenwand (3) und anschließend durch einen Wulst (4) verlängert sind, der dazu bestimmt ist, mit der Felge (5) in Kontakt zu kommen,
- wobei die Krone (2), die Seitenwände (3) und die Wülste (4) einen toroidalen Innenhohlraum (6) begrenzen,
- wobei der Reifen (1) eine Äquatorialebene (XZ) aufweist, die durch die Mitte seiner Lauffläche (21) verläuft und senkrecht zu einer Drehachse (YY') ist,
**dadurch gekennzeichnet, dass** der Reifen (1) eine Versteifungsstruktur (7) umfasst, die zwei Versteifungselemente (8) umfasst, wobei sich jedes kontinuierlich in dem toroidalen Innenhohlraum (6) von einer Kronenschnittstelle (81), die mit einer radial inneren Fläche der Krone (23) verbunden ist, bis zu einer Wulstschnittstelle (82), die mit einer axial inneren Fläche des Wulstes (41) verbunden ist, erstreckt, **wobei** die Versteifungsstruktur (7) über den gesamten Umfang des Reifens in Umfangsrichtung verteilt ist, **wobei** die Kronenschnittstelle (81) in Bezug auf die Äquatorialebene (XZ) in einem axialen Abstand A positioniert ist, der höchstens dem 0,45-Fachen der axialen Breite S entspricht, **wobei** die Wulstschnittstelle (82) in Bezug auf einen radial innersten Punkt (I) der axial inneren Fläche des Wulstes (41) in einem radialen Abstand B positioniert ist, der mindestens dem 0,10-Fachen der radialen Höhe H und höchstens dem 0,5-Fachen der radialen Höhe H entspricht, **und wobei** die Kronenschnittstelle (81) ein Kissen (811) aus Elastomermischung umfasst, das zumindest teilweise zwischen dem Versteifungselement (8) und der radial inneren Fläche der Krone (23) angeordnet ist, und/oder die Wulstschnittstelle (82) ein Kissen (821) aus Elastomermischung umfasst, das zumindest teilweise mit dem Versteifungselement (8) und der axial inneren Fläche des Wulstes (41) in Kontakt steht.

2. **-** Reifen nach dem vorhergehenden Anspruch, **wobei** die beiden Versteifungselemente (8) symmetrisch auf beiden Seiten der Äquatorialebene (XZ) positioniert sind.

3. **-** Reifen nach einem der vorhergehenden Ansprüche, **wobei** die Kronenschnittstelle (81) in Bezug auf die Äquatorialebene (XZ) in einem axialen Abstand A positioniert ist, der mindestens dem 0,05-Fachen und höchstens dem 0,15-Fachen der axialen Breite S entspricht.

4. **-** Reifen nach einem der vorhergehenden Ansprüche, **wobei** die Wulstschnittstelle (82) in Bezug auf einen radial innersten Punkt (I) der axial inneren Fläche des Wulstes (41) in einem radialen Abstand B positioniert ist, der höchstens dem 0,35-Fachen der radialen Höhe H entspricht.

5. **-** Reifen nach einem der vorhergehenden Ansprüche, **wobei** die Kronenschnittstelle (81) über eine Breite A1 verteilt ist, die mindestens dem 0,1-Fachen der axialen Breite entspricht.

6. **-** Reifen nach einem der vorhergehenden Ansprüche, **wobei** die beiden Versteifungselemente (8) innerhalb des toroidalen Innenhohlraums (6) nicht miteinander verbunden sind.

7. **-** Reifen nach einem der vorhergehenden Ansprüche, wobei die Kronenschnittstelle (81) über eine Breite A1 verteilt ist, **wobei** die Wulstschnittstelle (82) über eine Breite B1 verteilt ist, die mindestens der Breite A1 entspricht.

8. **-** Reifen nach einem der vorhergehenden Ansprüche, **wobei** das Kissen (821) aus Elastomermischung der Wulstschnittstelle (82) zumindest teilweise mit einer Verstärkungsschicht (822) in Kontakt steht, so dass das Kissen (821) durch das Versteifungselement (8), die axial innere Fläche des Wulstes (41) und die Verstärkungsschicht (822) begrenzt ist.

9. **-** Reifen nach einem der vorhergehenden Ansprüche, **wobei** jedes Versteifungselement (8) ein Polymermaterial, wie beispielsweise ein aliphatisches Polyamid, ein aromatisches Polyamid oder einen Polyester, oder ein Metallmaterial, wie beispielsweise Stahl, oder ein Material vom Glas- oder Kohlenstofftyp oder eine beliebige Kombination der vorgenannten Materialien umfasst.

10. **-** Reifen nach einem der vorhergehenden Ansprüche, **wobei** das Versteifungselement (8) nicht abgedichtet ist.

11. **-** Reifen nach einem der vorhergehenden Ansprüche, **wobei** jedes Versteifungselement (8) fadenförmige Verstärkungselemente (83) umfasst, die zumindest in der Nähe der Kronenschnittstelle (81) bzw. der Wulstschnittstelle (82) mit einer Elastomermischung (84) beschichtet sind, so dass das Versteifungselement (8) nicht abgedichtet ist.

12. **-** Reifen nach Anspruch 11, **wobei** jedes Versteifungselement (8) aus einer Familie von fadenförmigen Verstärkungselementen (83) besteht, die zueinander parallel sind und mit einer Umfangsrichtung (XX') einen Winkel C1 bilden, der mindestens 85° und höchstens 95° beträgt.

13. **-** Reifen nach Anspruch 11, **wobei** jedes Versteifungselement (8) aus einer ersten Familie von fadenförmigen Verstärkungselementen (83) besteht, die zueinander parallel sind und mit einer Umfangsrichtung (XX') einen Winkel C1 bilden, der mindestens 45° und höchstens 75° beträgt, wobei die erste Familie in Bezug auf eine zweite Familie von fadenförmigen Verstärkungselementen (83) gekreuzt ist, die zueinander parallel sind und mit einer Umfangsrichtung (XX') einen Winkel C2 bilden, der mindestens 45° und höchstens 75° beträgt.

14. **-** Reifen nach dem vorhergehenden Anspruch, **wobei** die Winkel C1 und C2 betragsmäßig gleich und entgegengesetzt sind.

## Claims

1. **-** Vehicle tyre (1), which is intended to be mounted on a nominal rim (5) and inflated to a nominal pressure P, has an axial width S and a radial height H in the mounted and inflated state, and comprises:
- a crown (2) having a radially outer tread surface (21), intended to come into contact with the ground, and two axial ends (22), each extended radially towards the inside by a sidewall (3) and then by a bead (4) intended to come into contact with the rim (5),
- the crown (2), the sidewalls (3) and the beads (4) delimiting a toroidal interior cavity (6),
- the tyre (1) having an equatorial plane (XZ) passing through the middle of its tread surface (21) and perpendicular to an axis of rotation (YY'),
**characterized in that** the tyre (1) comprises a stiffening structure (7) comprising two stiffening elements (8), each extending continuously in the toroidal interior cavity (6) from a crown interface (81) connected to a radially inner face of the crown (23) to a bead interface (82) connected to an axially inner face of the bead (41), **in that** the stiffening structure (7) is distributed circumferentially around the entire circumference of the tyre, **in that** the crown interface (81) is positioned, with respect to the equatorial plane (XZ), at an axial distance A at most equal to 0.45 times the axial width S, **in that** the bead interface (82) is positioned, with respect to a radially innermost point (I) of the axially inner face of the bead (41), at a radial distance B at least equal to 0.10 times the radial height H and at most equal to 0.5 times the radial height H, **and in that** the crown interface (81) comprises a cushion (811) made of elastomer compound positioned at least partially between the stiffening element (8) and the radially inner face of the crown (23), and/or the bead interface (82) comprises a cushion (821) made of elastomer compound at least partially in contact with the stiffening element (8) and the axially inner face of the bead (41).

2. **-** Tyre according to the preceding claim, **wherein** the two stiffening elements (8) are positioned symmetrically on either side of the equatorial plane (XZ).

3. **-** Tyre according to any one of the preceding claims, **wherein** the crown interface (81) is positioned, with respect to the equatorial plane (XZ), at an axial distance A at least equal to 0.05 times and at most equal to 0.15 times the axial width S.

4. **-** Tyre according to any one of the preceding claims, **wherein** the bead interface (82) is positioned, with respect to a radially innermost point (I) of the axially inner face of the bead (41), at a radial distance B at most equal to 0.35 times the radial height H.

5. **-** Tyre according to any one of the preceding claims, **wherein** the crown interface (81) is distributed across a width A1 at least equal to 0.1 times the axial width.

6. **-** Tyre according to any one of the preceding claims, **wherein** the two stiffening elements (8) are not connected to one another inside the toroidal interior cavity (6).

7. **-** Tyre according to any one of the preceding claims, the crown interface (81) being distributed across a width A1, **wherein** the bead interface (82) is distributed across a width B1 at least equal to the width A1.

8. **-** Tyre according to any one of the preceding claims, **wherein** the cushion (821) made of elastomer compound of the bead interface (82) is at least partially in contact with a reinforcing layer (822), such that the cushion (821) is delimited by the stiffening element (8), the axially inner face of the bead (41) and the reinforcing layer (822).

9. **-** Tyre according to any one of the preceding claims, **wherein** any stiffening element (8) comprises a polymeric material, such as an aliphatic polyamide, an aromatic polyamide or a polyester, or a metal material, such as steel, or a glass- or carbon-type material or any combination of the above materials.

10. **-** Tyre according to any one of the preceding claims, **wherein** the stiffening element (8) is not sealed.

11. **-** Tyre according to any one of the preceding claims, **wherein** each stiffening element (8) comprises filamentary reinforcing elements (83) that are coated, at least in the vicinity of the crown interface (81) and bead interface (82), respectively, with an elastomer compound (84), such that the stiffening element (8) is not sealed.

12. **-** Tyre according to Claim 11, **wherein** each stiffening element (8) is made up of a family of filamentary reinforcing elements (83) that are mutually parallel and form, with a circumferential direction (XX'), an angle C1 at least equal to 85° and at most equal to 95°.

13. **-** Tyre according to Claim 11, **wherein** each stiffening element (8) is made up of a first family of filamentary reinforcing elements (83) that are mutually parallel and form, with a circumferential direction (XX'), an angle C1 at least equal to 45° and at most equal to 75°, said first family being crossed with respect to a second family of filamentary reinforcing elements (83) that are mutually parallel and form, with a circumferential direction (XX'), an angle C2 at least equal to 45° and at most equal to 75°.

14. **-** Tyre according to the preceding claim, **wherein** the angles C1 and C2 are equal in terms of absolute value and opposite.
